# EUROPEAN PATENT SPECIFICATION

(11) **EP 3 817 460 B1**
(45) Date of publication and mention of the grant of the patent: **27.09.2023**
(21) Application number: 20194383.4
(22) Date of filing: 03.09.2020
(51) Int. Cl.: H04W 52/02

(54) **INFORMATION PROCESSING SYSTEM AND METHOD**
INFORMATIONSVERARBEITUNGSSYSTEM UND -VERFAHREN
SYSTÈME ET PROCÉDÉ DE TRAITEMENT D'INFORMATIONS

(30) Priority: 28.10.2019 JP 2019195292
(43) Date of publication of application: 05.05.2021
(73) Proprietor: Toshiba Tec Kabushiki Kaisha, Shinagawa-ku Tokyo 141-8562 (JP)
(72) Inventor: IWASAKI, Hiroshi, Shinagawa-ku, Tokyo 141-8562 (JP)
(74) Representative: Bandpay & Greuter

(56) References cited:
- EP-A1- 3 062 567
- WO-A1-2019/071615
- US-B1- 8 903 458

## Description

### FIELD

Embodiments described herein relate in general to information processing system utilizing batteries and a method of controlling such a system.

### BACKGROUND

Mobile information devices are usually operated with power supplied from rechargeable batteries (also called secondary batteries). The information devices that use secondary batteries are typically not designed for easy or quick battery replacement since doing so would usually mean forgoing some battery capacity that could otherwise be stored in a small housing of such a mobile device.

Since the battery of a mobile information device cannot be simply replaced, the battery is required to be recharged when the remaining amount of power is low. Since the information device is required to be placed at a specific recharging place during the recharging, the information device cannot be normally used during the recharging. Accordingly, there is a problem in that the service(s) provided by the information device is not available during the recharging (that is, downtime occurs). Therefore, in a mobile information device, such as an order terminal used in a store, it is desirable not to recharge the battery during the operating (open) hours of the store.

With respect to this problem, for example, the electronic device of existing art includes a power saving mode for reducing power consumption. When such a device enters the power saving mode, certain functions, set in advance by an operator, are stopped so as to prevent the consumption of the battery charge. However, since certain functions are not available in the power saving mode, it is likely that operation of frequently used functions will be restricted in the electronic device that will be used by many people. That is, while power consumption may be reduce, there is a problem in that the convenience to users is impaired.

Document WO2019071615 A1 and its family member US2020245252 A1, relates to a method of reducing power consumption of a terminal based on determining whether electricity consumption amount of a background application is greater than an electricity amount threshold. The document discloses a Rule for collecting statistics about use frequency of each background application program. The document indicates also that a cloud server collects data by a plurality of terminals and generates the preset rule by analysing and processing the collected data by using a big data analysis method. The cloud server pushes the preset rule to the terminal.

Document EP3062567 A1 relates to monitoring the power consumption of applications on a mobile device while the display is in off-state and displaying whether the value of the power consumption of an application exceeds a threshold value immediately after the display enters the on-state. The document indicates also that a terminal can receive the application use frequency also from an external electronic device.

### DESCRIPTION OF THE DRAWINGS

FIGS. 1A and 1B are external views of an example of a mobile terminal device according to a first embodiment.
FIG. 2 is a block diagram illustrating aspects of a hardware configuration of a mobile terminal device according to a first embodiment.
FIG. 3 is a block diagram illustrating certain aspects of a mobile terminal device according to a first embodiment.
FIG. 4 is a diagram illustrating an example of usage frequency data stored in a storage unit.
FIG. 5 is a diagram illustrating details of a function control table.
FIG. 6 is a diagram depicting states in which the usage of functions is gradually restricted in response to a remaining amount of power.
FIG. 7 is a flowchart for describing an example of a flow of processing performed by a mobile terminal device according to a first embodiment.
FIG. 8 is a system diagram illustrating a schematic configuration of an order processing system according to a second embodiment.
FIG. 9 is a block diagram illustrating aspects of an order processing system according to a second embodiment.
FIG. 10 is a diagram for describing aspects of a method in which a store server aggregates and analyzes usage frequencies of functions from a plurality of mobile terminal devices.
FIG. 11 is a flowchart illustrating aspects of processing performed by an order processing system according to a second embodiment.

### DETAILED DESCRIPTION

The invention is defined by the appended claims.

Embodiments provide an information processing system, and associated method, capable of lengthening the usable operating time while user convenience is maintained as much as possible.

In general, according to one embodiment not covered by the claims, an information processing device has various selectable functions. The device includes a processor and a rechargeable power supply, such as battery. The processor is configured to acquire a present charge level (amount of charge remaining) for the rechargeable power supply. The processor is additionally configured to determine to restrict an availability of at least one selectable function from among the various selectable functions based on a calculated usage frequency of each of the various selectable functions and the present charge level.

Preferably, the processor is further configured to determine to restrict the availability of the selectable function based on the power consumption of the selectable function.

Preferably, the processor is configured to: restrict an availability of a first selectable function based on the calculated usage frequency of each selectable function when the present charge level is less than a first threshold value, but greater than a second threshold value; and restrict an availability of a second selectable function based on the calculated usage frequency of each selectable function when the present charge level is less than or equal to the second threshold value.

Preferably, the information processing device further comprises a display for displaying the selectable functions on a menu screen.

Preferably, the processor is configured to generate the menu screen, and the selectable function having a restricted availability is displayed in a manner indicating a non-selectable state.

Preferably, the display is a touchscreen configured to receive user input selecting a selectable function.

Preferably, the calculated usage frequency for each selectable function is calculated for each selectable function as a total number of selections over a time period for the selectable function divided by a summed total number of selections over the time period for all of the selectable functions.

Preferably, the processor is further configured to register items ordered by customer in an order data file.

Preferably, the information processing device further comprises a wireless communication interface configured to communicate with a store server.

Preferably, the calculated usage frequency of each selectable function is provided by the store server via the wireless communication interface.

Preferably, the processor is configured to calculate the calculated usage frequency of each selectable function.

Preferably, the information processing device further comprises a notification unit configured to indicate a present operating state of the information processing device to a user, wherein the processor is further configured to control the notification unit according to the present charge level.

Preferably, the notification unit comprises at least one of an indicator light, a speaker, and a vibration unit.

In another exemplary embodiment, there is also provided an information processing system, comprising a plurality of the aforementioned information processing device and a store server. The store server is configured to: receive usage frequency data for each selectable function from each information processing device; calculate a usage frequency over a time period for each selectable function based on the received usage frequency data; and send the calculated usage frequency for each selectable function to each information processing device.

In another exemplary embodiment not covered by the claims, there is also provided a method of controlling an information processing device having various selectable functions and a rechargeable battery, the method comprising: acquiring a present charge level of the rechargeable battery; and restricting an availability of a selectable function based on a calculated usage frequency of each selectable function and the present charge level.

Preferably, the method further comprises: restricting an availability of a first selectable function based on the calculated usage frequency of each selectable function when the present charge level is less than a first threshold value, but greater than a second threshold value; and restricting an availability of a second selectable function based on the calculated usage frequency of each selectable function when the present charge level is less than or equal to the second threshold value.

### (First embodiment not covered by the claims)

Hereinafter, with reference to the accompanying drawings, a first embodiment is described. The first embodiment is an information processing device. The information processing device in this example is a mobile terminal device used for receiving an order of a customer in a restaurant, a shop, or the like.

### (Schematic configuration of mobile terminal device)

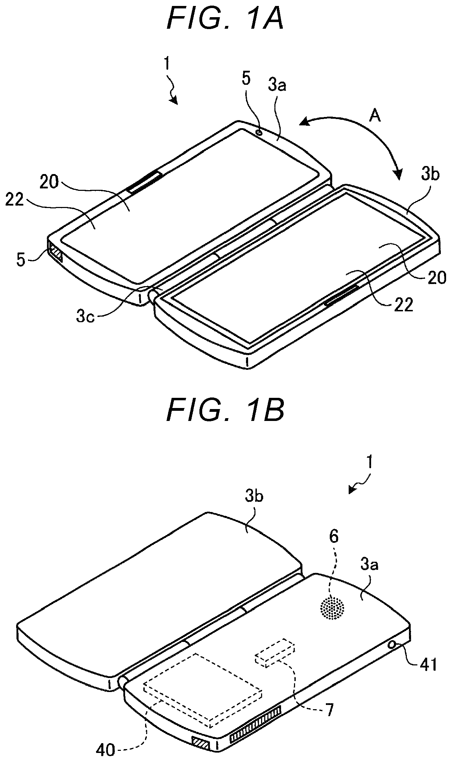

FIGS. 1A and 1B are external views of an example of a mobile terminal device of the first embodiment. Particularly, FIGS. 1A and 1B are external views of a mobile terminal device 1 as viewed from a front and back side, respectively. The mobile terminal device 1 is used as an order terminal for receiving an order of a customer, for example, in a restaurant or the like. The mobile terminal device 1 is not necessarily limited to an order terminal, and may be a tablet terminal or may be a smart phone having other functions in addition to, or instead of, receiving a customer order. The mobile terminal device 1 is one example of an information processing device according to an embodiment of the present disclosure.

As illustrated in FIGS. 1A and 1B, the mobile terminal device 1 has a first housing 3a provided with a liquid crystal display 20 and a second housing 3b that is connected to the first housing 3a via a rotation support 3c (e.g., a hinge) and that can be freely opened and closed in the directions of arrow A. The liquid crystal display 20 functions as a display portion, and displays, for example, an input screen for an order clerk to input order information. A touch panel 22 is layered on the surface of the liquid crystal display 20. The mobile terminal device 1 receives an input of order information by detecting a touch of an operation button displayed on the input screen by the touch panel 22.

The mobile terminal device 1 includes an indicator 5, a speaker 6, and a vibrator 7 that provide notifications of the mobile terminal device 1 operation state(s). The indicator 5 is included on the edge or a side surface of the mobile terminal device 1, and is for example, an LED. The indicator 5 reports the state of the mobile terminal device 1 with light. The speaker 6 is provided inside of the housing of the mobile terminal device 1 and reports the state of the mobile terminal device 1 by sound. The vibrator 7 is provided inside of the housing of the mobile terminal device 1 and reports the state of the mobile terminal device 1 by vibration. The indicator 5, the speaker 6, and the vibrator 7 are examples of a notification unit according to the present embodiment. Generally, the power consumption by each of these components decreases in the order of the vibrator 7, the speaker 6, and the indicator 5. As described below, the mobile terminal device 1 uses each notification unit in response to a remaining amount of a battery.

A battery 40 is mounted inside the mobile terminal device 1. The battery 40 is, for example, a rechargeable secondary battery such as a nickel-hydrogen battery or a lithium ion battery and supplies power to the mobile terminal device 1. The battery 40 is provided inside the mobile terminal device 1 in a non-removable state. That is, when the power of the battery 40 is depleted, a charging terminal 41 of the mobile terminal device 1 must be connected to a commercial power supply of, for example, 100 V AC for recharging. The battery 40 is an example of a power supply unit.

### (Description of hardware configuration of mobile terminal device)

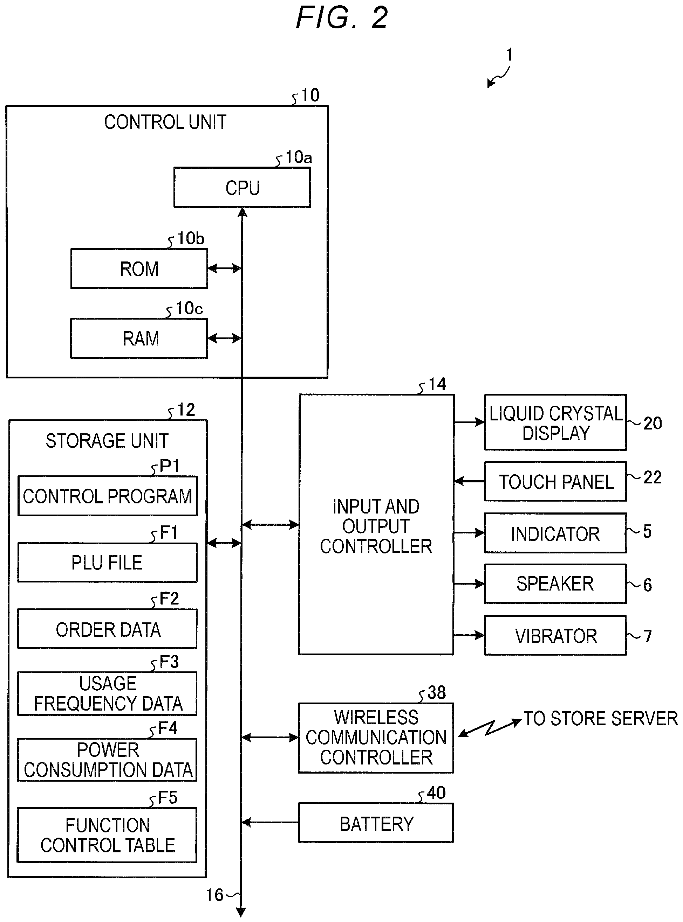

FIG. 2 is a block diagram illustrating an example of a hardware configuration of the mobile terminal device according to the first embodiment. The mobile terminal device 1 includes a control unit 10, a storage unit 12, an input and output controller 14, a wireless communication controller 38, and the battery 40.

The control unit 10 includes a central processing unit (CPU) 10a, a read only memory (ROM) 10b, a random access memory (RAM) 10c. The CPU 10a is connected to the ROM 10b and the RAM 10c via a bus 16. The CPU 10a loads various programs or files stored in the ROM 10b or the storage unit 12 on the RAM 10c. The CPU 10a controls the mobile terminal device 1 according to various programs or files loaded into the RAM 10c. That is, the control unit 10 in this example is configured as a general computer and may be referred to as a controller or the like.

The control unit 10 is also connected to the storage unit 12 and the input and output controller 14 via the bus 16.

The storage unit 12 is a nonvolatile memory such as a flash memory, a hard disk drive (HDD) or the like, which retains stored information even when the power is turned off. The storage unit 12 stores a program or the like including a control program P1. The control program P1 is a program for implementing a function included in the mobile terminal device 1.

The control program P1 may be incorporated in the ROM 10b in advance. The control program P1 can be a file in a format that is installable or executable and may be recorded in a computer-readable recording medium such as a CD-ROM, a flexible disk (FD), a CD-R, and a digital versatile disc (DVD). The control program P1 can be stored in a computer connected a network such as the Internet and downloaded via a network. The control program P1 may be provided or distributed via a network such as the Internet.

The storage unit 12 stores a PLU file F1, order data F2, usage frequency data F3, power consumption data F4, and a function control table F5.

The PLU file F1 is a file, table, or the like that stores merchandise information (such as merchandise code, merchandise name, and price) of a menu or items handled at the store. When an order is received from a customer, an order clerk can refer to a merchandise corresponding to the PLU file F1 to calculate a unit price of the merchandise. Since the menu handled at the store changes every day, the PLU file F1 may be constantly updated via the wireless communication controller 38 from a store server or the like.

The order data F2 is a file, table, or the like that stores an order data that has been input according to the instruction from the customer.

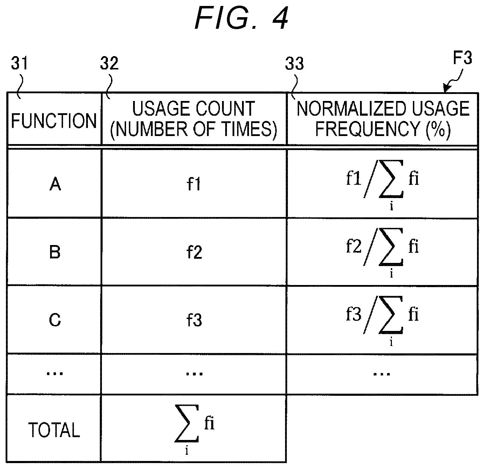

The usage frequency data F3 is a file, table, or the like in which the usage frequency of each function of the mobile terminal device 1 is cumulatively stored. Specifically, the cumulative number of times each menu in a menu screen of the mobile terminal device 1 has been selected can be stored. Details thereof are described below (with reference to FIG. 4).

The power consumption data F4 is a file, table, or the like in which a power consumption value for each function of the mobile terminal device 1 is stored. The power consumption value in this context indicates the power consumed when the function is operated or otherwise active.

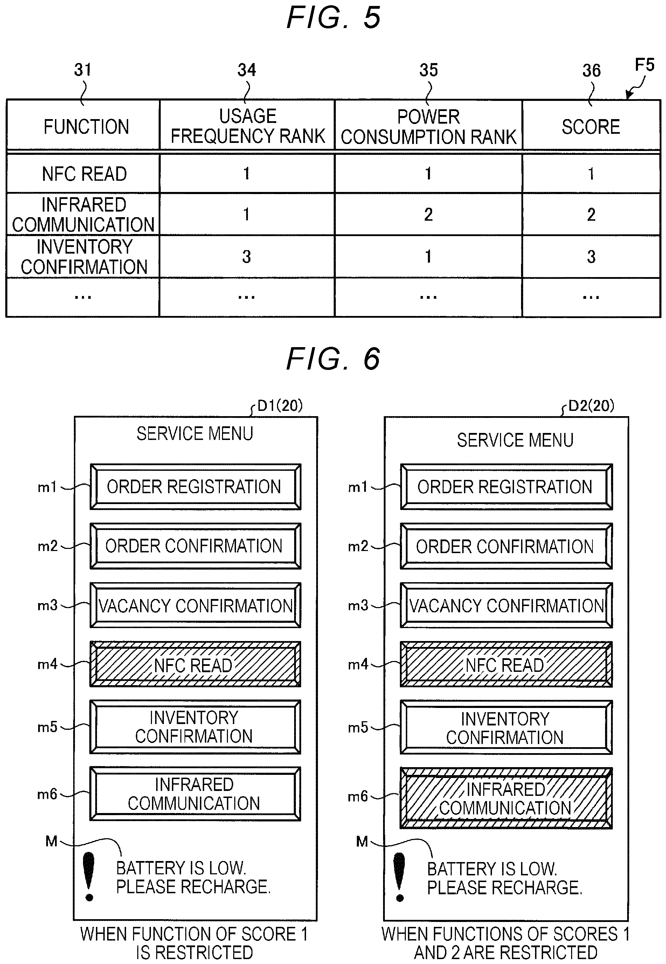

The function control table F5 is a file, table, or the like in which functions that might be restricted when remaining amount of power of the battery 40 decreases are listed and ranked based on the usage frequency and power consumption. Details thereof are described below (with reference to FIG. 5).

The input and output controller 14 connects the control unit 10 to the liquid crystal display 20, the touch panel 22, the indicator 5, the speaker 6, and the vibrator 7. The input and output controller 14 can control various kinds of connected hardware based on instructions from the control unit 10.

The liquid crystal display 20 displays various buttons for operating the mobile terminal device 1, the operation state of the mobile terminal device 1, and the like.

The touch panel 22 overlaps with the liquid crystal display 20, detects input operation information from an operator pressing the various buttons displayed on the liquid crystal display 20, and transmits information in response to the input operation information to the control unit 10.

The indicator 5, for example, gives a report/notice when the remaining amount of power of the battery 40 decreases beyond a certain level or the like. The indicator 5 is configured, for example, with an LED, and desirably emits light with a conspicuous color such as orange or red. The reporting form is not particularly limited, but for example, the reporting can be performed by blinking or lighting the indicator 5. The indicator 5 may change the reporting form in response to a remaining amount of the battery 40. For example, as the remaining amount of the battery 40 becomes smaller, the blinking interval of the indicator 5 may be set to become shorter.

The speaker 6 gives a report, for example, by outputting sound or voice when the remaining amount of power of the battery 40 decreases or the like. The speaker 6 may change a reporting form in response to a remaining amount of the battery 40. For example, as the remaining amount of the battery 40 becomes smaller, the volume of the sound or the voice may be changed.

The vibrator 7 gives a report, for example, by vibrating the first housing 3a when the remaining amount of power of the battery 40 is decreased or the like. The vibrator 7 may change the reporting form in response to the remaining amount of the battery 40. For example, as the remaining amount of the battery 40 becomes smaller, the vibration intensity of the vibrator 7 may be decreased or the vibration time may be shortened.

The mobile terminal device 1 includes three different kinds of notification units. The mobile terminal device 1 switches or alters the notification unit used in response to the remaining amount of power of the battery 40.

The control unit 10 is connected to the wireless communication controller 38 via the bus 16. The wireless communication controller 38 wirelessly connects the mobile terminal device 1 to a store server, a kitchen printer, or the like. The wireless communication is, for example, Wi-Fi^{®}.

The battery 40 is connected to the bus 16.

### (Description of function configuration of mobile terminal device)

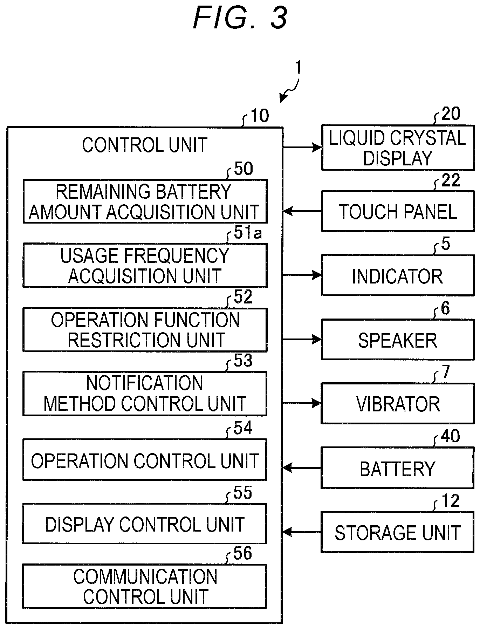

FIG. 3 is a block diagram illustrating an example of the configuration of the mobile terminal device according to the first embodiment. The control unit 10 loads and operates the control program P1 in the RAM 10c to realize the functions of a remaining battery amount acquisition unit 50, a usage frequency acquisition unit 51a, an operation function restriction unit 52, a notification method control unit 53, an operation control unit 54, a display control unit 55, and a communication control unit 56. The control unit 10 performs an operation based on the information acquired from the touch panel 22, the battery 40, and the storage unit 12 and outputs the information to the liquid crystal display 20, the indicator 5, the speaker 6, and/or the vibrator 7, accordingly.

The remaining battery amount acquisition unit 50 acquires the remaining amount of power from the battery 40.

The usage frequency acquisition unit 51a collects and stores the usage count of each function of the mobile terminal device 1 in the usage frequency data F3.

The operation function restriction unit 52 restricts a function of the mobile terminal device 1 based on the remaining amount of power of the battery 40, the usage frequency data F3, and the power consumption data F4. The operation function restriction unit 52 may restrict the function of the mobile terminal device 1 based on the remaining amount of power of the battery 40 and the usage frequency data F3 for each function of the mobile terminal device 1.

The notification method control unit 53 selects the notification method in which less power is consumed among the indicator 5, the speaker 6, and the vibrator 7 (collectively referred to as notification units) that indicate the operation state of the mobile terminal device 1 in response to the decrease of the remaining amount of power of the battery 40.

The operation control unit 54 acquires an operation detail of the touch panel 22 and recognizes the operation detail performed on the mobile terminal device 1.

The display control unit 55 displays on the liquid crystal display 20 the function(s) for which the operation has been restricted for the mobile terminal device 1.

The communication control unit 56 controls the communication between the mobile terminal device 1 and the store server or the like. The mobile terminal device 1 transmits, for example, the input order information to the store server.

### (Description of method of calculating usage frequency of mobile terminal device)

With reference to FIG. 4, the method of calculating the usage frequency of each function of the mobile terminal device 1 is described. FIG. 4 is a diagram illustrating an example of the usage frequency data stored in the storage unit.

The usage frequency data F3 is a file in which a usage count 32 and a normalized usage frequency 33 are stored for each function 31 included in the mobile terminal device 1.

The usage count 32 represents a cumulative usage count of each available function (A, B, C, ...). That is, the example of FIG. 4 indicates that a function A has been used a total of f1 times in the past, a function B has been used a total of f2 times in the past, and a function C has been used a total of f3 times in the past.

If only the accumulated usage count is used as the usage frequency, the usage frequency increases according to the length of the usage period (lifetime) of the mobile terminal device 1. Therefore, in the present embodiment, the usage frequency is normalized. That is, a value obtained by dividing the number of times of the operation of each function by the summed number of operations of all functions is used to calculate a normalized usage frequency of each function as a percentage of all function uses is used as the usage frequency of each function. In the description, references to "usage frequency" refers to the normalized usage frequency.

The normalized usage frequency 33 presented in FIG. 4 is a value calculated in the above described manner. That is, the usage frequency of the function A is a value obtained by dividing the usage count f1 by the summed usage counts of all functions. Similarly, the usage frequency of any function i is a value obtained by dividing the usage count fi of the function i by the summed usage counts of all functions. In this manner, by using the normalized usage frequency, it is possible to prevent a simplistic monotonic increase in the usage frequency values related only to the increase of the usage period of the mobile terminal device 1.

Immediately after the usage of the mobile terminal device 1 is first started (or reset), parameters of the frequency data are small, and thus an actual usage is not necessarily correctly established. Therefore, it is desirable to start to control the function restriction after the frequency data has been collected and stored to a certain degree (for example, after the sum of the usage counts exceeds 100 times).

### (Description of method of restricting usage function of mobile terminal device)

With reference to FIGS. 5 and 6, the method of restricting the usable function(s) of the mobile terminal device 1 according to the usage frequency and the remaining amount of power is described. FIG. 5 is a diagram illustrating details of the function control table used when the usable function will be restricted. FIG. 6 is a diagram illustrating states in which the usage of the functions are gradually decreased according to the usage frequency and the power consumption of each function and to the remaining amount of power.

As the remaining amount of power of the battery 40 decreases, the operation function restriction unit 52 of the mobile terminal device 1 refers to the function control table F5 stored in the storage unit 12 to control the stopping of operations for a portion of available functions.

The function control table F5 is a file in which a usage frequency rank 34 of each function, a power consumption rank 35, and a score 36 are stored for each the functions 31 included in the mobile terminal device 1.

The usage frequency rank 34 is a rank generated by the usage frequency acquisition unit 51a based on the usage frequency data F3. The usage frequency acquisition unit 51a compares the usage frequency of each function to predetermined threshold values and to give a lower usage frequency rank to those functions for which the usage frequency is lower.

The power consumption rank 35 is a rank generated by the operation function restriction unit 52 based on the power consumption data F4. The operation function restriction unit 52 compares predetermined threshold values set to the power consumption for each function to give a lower power consumption rank to those functions have a lower power consumption.

The score 36 is a composite or combined value of the usage frequency rank 34 and the power consumption rank 35. That is, as a function has a lower usage frequency and a lower power consumption, the score 36 becomes lower. In contrast, as a function has a higher usage frequency and a higher power consumption, the score 36 becomes higher. The score 36 illustrated in FIG. 5 is a simple combined value of the usage frequency rank 34 and the power consumption rank 35, but weighting factors may be applied to the usage frequency rank 34 and the power consumption rank 35, if either the usage frequency or the power consumption is considered more or less important that the other.

When the remaining amount of power of the battery 40 decreases, the operation function restriction unit 52 refers to the function control table F5 to stop the operation of the function(s) according to the score 36 value(s). Accordingly, the operation function restriction unit 52 stops operations additional functions as the remaining amount of power further decreases.

The operation function restriction unit 52 sets threshold values for the remaining amount of power of the battery 40 at which functions will be made unavailable. For example, a threshold value Th1 and a threshold value Th2 that is less than the threshold value Th1 are set. When the remaining amount of power of the battery 40 is more than the threshold value Th1, the operation function restriction unit 52 permits all functions of the mobile terminal device 1 to operate. When the remaining amount of power of the battery 40 is more than the threshold value Th2 but less than or equal to the threshold value Th1, a function with the score "1" among the functions of the mobile terminal device 1 will be stopped. When the remaining amount of power of the battery 40 is less than or equal to the threshold value Th2, the functions with the scores "1" and "2" are stopped.

Similarly, if a threshold value Th3 less than the threshold value Th2 is set, once the remaining amount of power of the battery 40 is less than or equal to the threshold value Th3, functions with the scores "1", "2", and "3" may be stopped.

When the function of which the operation is stopped can be selected, the operation function restriction unit 52 may select the function based on the usage frequency rank of the function control table F5.

Subsequently, with reference to FIG. 6, specific operations performed by the operation function restriction unit 52 are described.

A plurality of selectable menu items that can be selected by a user for performing various tasks on the mobile terminal device 1 are displayed on a menu screen D1 (service menu) that is displayed on the liquid crystal display 20. In the example of FIG. 6, an order registration menu item m1, an order confirmation menu item m2, a vacancy confirmation menu item m3, an NFC read menu item m4, an inventory confirmation menu item m5, and an infrared communication menu item m6 are displayed.

The order registration menu item m1 is for registering an order detail received from the customer. The order confirmation menu m2 item is for confirming the information (such as order details and order preparation status) relating to the registered order details. The vacancy confirmation menu item m3 is for confirming a vacancy state. The NFC read menu item m4 is for reading a membership card of a customer or the like by near-field communication (NFC) or the like. The inventory confirmation menu item m5 is for confirming the inventory of the available merchandise. The infrared communication menu item m6 is for initiating infrared communication between the mobile terminal device 1 and various peripheral devices or the like.

When the remaining amount of power of the battery 40 is sufficiently high, all of these menus items are displayed on the liquid crystal display 20 in a selectable state, that is, as an active button, rather than as "grayed-out" non-selectable state.

When the remaining amount of power of the battery 40 is more than the threshold value Th2 , but less than or equal to the threshold value Th1, as illustrated in the menu screen D1 of FIG. 6, the operation of the NFC read menu item m4 (with the score "1") is stopped by the operation function restriction unit 52. A menu item for which the operation has been stopped is indicated as being in a non-operation state by darkening (graying out) the corresponding button on the screen of the liquid crystal display 20.

A message saying that "BATTERY IS LOW. PLEASE RECHARGE" is displayed on the lower portion of the menu screen D1 by the instruction of the display control unit 55.

If the remaining amount of power of the battery 40 further decreases so as to be the threshold value Th2 or less, an operation of the infrared communication menu item m6 (with the score "2") is stopped in addition to the NFC read menu item m4 (with the score "1") as illustrated in a menu screen D2 of FIG. 6, by the operation function restriction unit 52. The menu items for which the operation has been stopped are indicated to be in a non-operation state by the darkening of the button on the screen of the liquid crystal display 20.

A message saying that "BATTERY IS LOW. PLEASE RECHARGE" is again displayed on the lower portion of the menu screen D2 by the instruction of the display control unit 55.

Though not specifically illustrated in FIG. 6, the notification method control unit 53 of the mobile terminal device 1 may select a unit that consumes the least amount of power among the indicator 5, the speaker 6, and the vibrator 7 to perform a notification of the low batter state. Generally, the power consumption required when the notification is performed decreases in an order of the vibrator 7, the speaker 6, and the indicator 5. When the remaining amount of power of the battery 40 is sufficiently high, the notification is performed mainly by using the vibrator 7 or the speaker 6. When the remaining amount of power of the battery 40 decreases, the notification is performed mainly by using the speaker 6 or the indicator 5. When the remaining amount of power of the battery 40 further decreases, the notification is performed only by using the indicator 5. As described above, with respect to each notification unit, the notification method may be changed in response to the remaining amount of power of the battery 40.

### (Description of processing performed by a mobile terminal device)

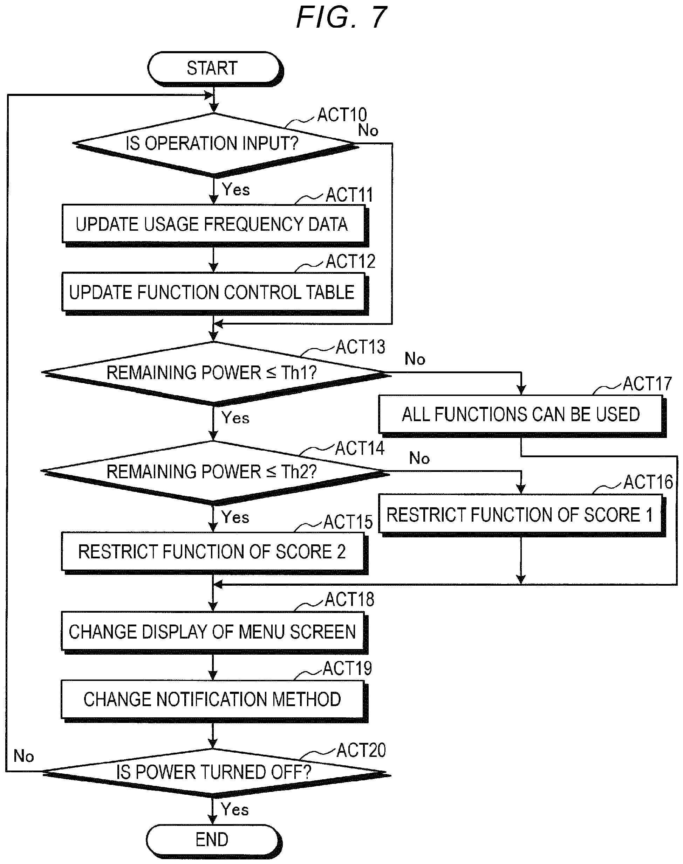

FIG. 7 is a flowchart for describing an example of the flow of the processing performed by the mobile terminal device 1 according to the first embodiment.

The operation control unit 54 determines that there has been an operation input on the touch panel 22 (Act 10). If it is determined that there has been an operation input on the touch panel 22 (Act 10: Yes), the process proceeds to Act 11. If an operation input on the touch panel 22 has not occurred (Act 10: No), the process skips to Act 13.

If it is determined as a Yes in Act 10, the usage frequency acquisition unit 51a updates the usage frequency data F3 (Act 11).

The operation function restriction unit 52 refers to the updated usage frequency data F3 in Act 11 and updates the usage frequency rank 34 and the score 36 in the function control table F5 (Act 12).

The remaining battery amount acquisition unit 50 determines whether the remaining amount of power of the battery 40 is the threshold value Th1 or less (Act 13). If it is determined that the remaining amount of power is the threshold value Th1 or less (Act 13: Yes), the process proceeds to Act 14. If the remaining amount of power is above the threshold value Th1 (Act 13: No), the process proceeds to Act 17.

If it is determined as No in Act 13, the operation function restriction unit 52 enables all functions of the mobile terminal device 1 (Act 17). Thereafter, the process proceeds to Act 18.

If it is determined as Yes in Act 13, the remaining battery amount acquisition unit 50 determines whether the remaining amount of power of the battery 40 is the threshold value Th2 or less (Act 14). If it is determined that the remaining amount of power of the battery 40 is the threshold value Th2 or less (Act 14: Yes), the process proceeds to Act 15. If the remaining amount of power of the battery 40 is above the threshold value Th2 (Act 14: No), the process proceeds to Act 16.

If it is determined as No in Act 14, the operation function restriction unit 52 restricts (stops using) the function with the score "1" in the function control table F5 (Act 16). Thereafter, the process proceeds to Act 18.

If it is determined as Yes in Act 14, the operation function restriction unit 52 restricts (stops using) the function with the score "2" in the function control table F5 (Act 15). Thereafter, the process proceeds to Act 18.

Subsequent to any of Act 15, 16, or 17, the display control unit 55 sets the display of the menu screen of the mobile terminal device 1 (Act 18). Specifically, after Act 15 or Act 16, the menu button(s) corresponding to the function(s) for which the usage has been stopped are grayed out (made non-selectable).

The notification method control unit 53 changes the notification method of the information as described above in response to the remaining amount of power of the battery 40(Act 19).

The operation control unit 54 detects whether an operation of turning off the power of the mobile terminal device 1 has been performed (Act 20). If it is determined that an operation of turning off the power of the mobile terminal device 1 has been performed (Act 20: Yes), the mobile terminal device 1 ends the processing of FIG. 7. If it is not determined that the operation of turning off the power of the mobile terminal device 1 has been performed (Act 20: No), the process returns back to Act 10.

As described above, in the mobile terminal device 1 according to the first embodiment, the remaining battery amount acquisition unit 50 acquires the remaining amount of power of the battery 40 (or other power supply unit) that supplies the power to the mobile terminal device 1. The operation function restriction unit 52 restricts which functions can be operated based on the remaining amount of power of the battery 40 and the usage frequency of each function. Accordingly, the charge lifetime of the battery 40 can be lengthened by stopping the operation of certain functions with a low usage frequency. Therefore, even if the mobile terminal device 1 is still being used by many people, a function to be restricted is selected based on a past usage history to be a function that is rarely used or least used, and thus user operations on the mobile terminal device 1 are less hindered by the limitation of available functions. Accordingly, the operation time of a device can be increased without substantially deteriorating user convenience.

In the mobile terminal device 1 (information processing device) of the first embodiment, the operation function restriction unit 52 considers the usage frequency and the power consumption of each function of the mobile terminal device 1 when restricting the available function(s). Accordingly, for example, when there are a multiple functions with the same usage frequency, a more effective function restriction can be performed by preferentially restricting a function with greater power consumption.

In the mobile terminal device 1 of the first embodiment, the operation function restriction unit 52 stepwise restricts the functions to be operated in response to changes in the remaining amount of power of the battery 40 of the mobile terminal device 1. Accordingly, by not disabling many functions at once, as many functions as possible can be used.

In the mobile terminal device 1 of the first embodiment, the display control unit 55 displays the restriction of the operation on the liquid crystal display 20. Accordingly, the restriction of the operation of certain functions can be presented to an operator of the mobile terminal device 1.

In the mobile terminal device 1 of the first embodiment, the notification method control unit 53 selects a notification method that consumes less power from among the plurality of notification units (the indicator 5, the speaker 6, and the vibrator 7) in response to the decreases of the remaining amount of power of the battery 40 of the mobile terminal device 1. Accordingly, when the remaining amount of power of the battery 40 decreases, the power consumption by the notification unit(s) can be reduced.

In some examples, the restricted function of the mobile terminal device 1 may be a charging or operation of a peripheral device that can be connected to the mobile terminal device 1. Therefore, when the mobile terminal device 1 restricts such a function, a notice as to whether the peripheral device can be used may be provided by using any one or all of the notification units (the indicator 5, the speaker 6, or the vibrator 7).

According to the first embodiment, as an example of the mobile terminal device 1, an order terminal is described, but the present disclosure can be applied to other mobile terminals incorporating a secondary battery or the like. For example, the present disclosure can be applied to a cart point-of-sale (POS) terminal that is provided on a shopping cart used in a retail store and enables a customer to register a purchased product. In other examples, the present disclosure may be applied to a business order terminal device that is used for stocktaking (inventory tracking) in a logistics field, a warehouse, or the like.

The mobile terminal device 1 can acquire the remaining amount of power of the battery 40 and includes power consumption data F4 for each function, and thus an approximate number of times each function could be performed on the remaining battery charge may be calculated and display on the liquid crystal display 20 or otherwise provided.

### (Second embodiment)

The second embodiment is an example in which the information processing device is used in an order processing system 30 that provides a food service or a merchandise sales service in response to an order of a customer in a restaurant, a shop, or the like.

### (Schematic configuration of order processing system)

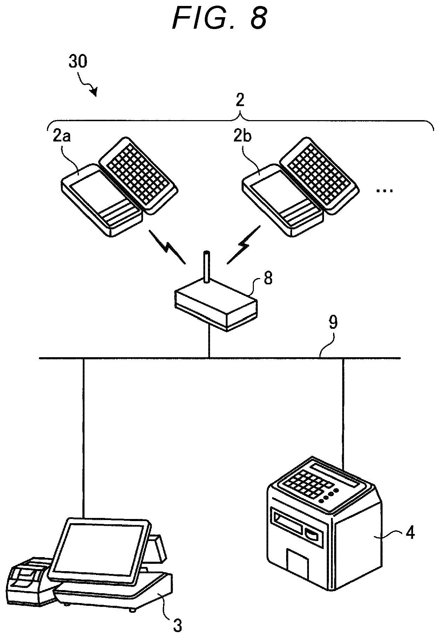

FIG. 8 is a system diagram illustrating a schematic configuration of an order processing system according to the second embodiment. The order processing system 30 includes a plurality of mobile terminal devices 2 being used in a store, a store server 3, and a slip printer 4 connected via a local area network (LAN) 9. Here, the mobile terminal devices 2 are connected to a LAN 9 via a wireless access point 8.

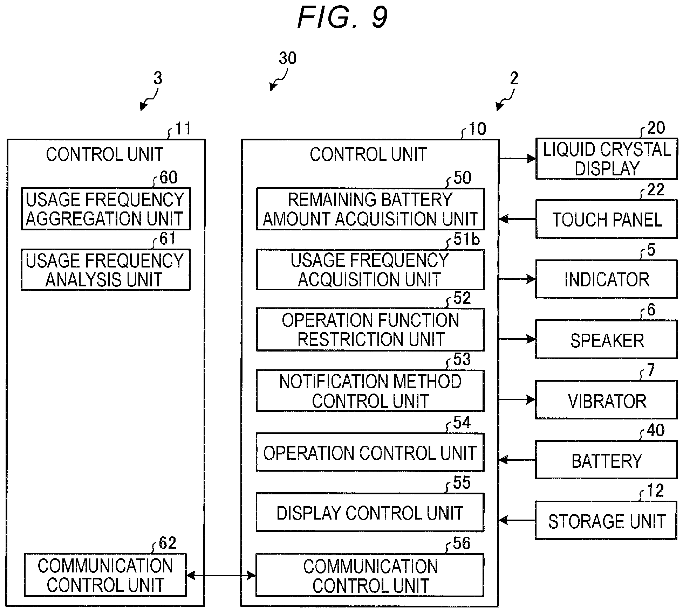

The mobile terminal device 2 includes most the same functions as the mobile terminal device 1 described in the first embodiment and the hardware configuration is substantially the same as that of the mobile terminal device 1. Here, according to the first embodiment, the mobile terminal device 2 executes a control program stored inside thereof and the control program configures the control unit 10 (with reference to FIG. 9) to provide various functions. The usage frequency data F3 that represents a usage frequency of various functions of the mobile terminal device 2 is different from that in the first embodiment in that the usage frequency data F3 is transmitted to the store server 3 and stored and managed in the store server 3.

The plurality of mobile terminal devices 2 are prepared and operated by order clerks (e.g., waiters or sales persons) or the like. The mobile terminal device 2 functions as an order receiving device that receives an operation of a user for an order input. The mobile terminal device 2 generates the order information according to the input operation and transmits this order information to the store server 3 via the wireless access point 8 and the LAN 9.

The store server 3 is a personal computer (PC), a point of sales (POS) terminal, or the like, and is provided, for example, on a customer service floor or a checkout counter. The store server 3 performs processing relating to various services such as a guide service, an order service, a serving service, or a transaction accounting service for customers. The store server 3 acquires the usage frequency for each function from each mobile terminal device 2 and calculates the usage frequency for each function of the plurality of mobile terminal devices 2.

The store server 3 includes a hardware configuration of a general computer. The store server 3 is operated by a control program stored inside thereof which configures the control unit 11 (with reference to FIG. 9) inside the store server 3.

For example, the slip printer 4 is provided on a customer service floor or in a kitchen. The slip printer 4 provided on the customer service floor prints an order slip based on the order information from a customer. That is, the slip printer 4 provided on the customer service floor is used as a so-called customer printer. The slip printer 4 provided in the kitchen prints a cooking instruction slip based on the order information for a cook. That is, the slip printer 4 provided in the kitchen is used as a so-called kitchen printer.

### (Function configuration of order processing system)

FIG. 9 is a function block diagram illustrating an example of a function configuration of the order processing system of the second embodiment. The control unit 10 of the mobile terminal device 2 realizes, as illustrated in FIG. 9, a remaining battery amount acquisition unit 50, a usage frequency acquisition unit 51b, an operation function restriction unit 52, a notification method control unit 53, an operation control unit 54, a display control unit 55, and a communication control unit 56 by execution of the control program of the mobile terminal device 2.

The usage frequency acquisition unit 51b acquires the usage count of each function of the mobile terminal device 2. The usage frequency acquisition unit 51b causes the communication control unit 56 to transmit the acquired usage frequency to the store server 3.

The communication control unit 56 controls the communication between the mobile terminal device 2 and the store server 3.

Other functional units provide the same functions as the functional units (with reference to FIG. 3) described in the first embodiment.

The control unit 11 of the store server 3 realizes, as illustrated in FIG. 9, a usage frequency aggregation unit 60, a usage frequency analysis unit 61, and a communication control unit 62 by executing a control program.

The usage frequency aggregation unit 60 aggregates a usage frequency for each function of the mobile terminal device 2 from all the mobile terminal devices 2 (2a, 2b, and the like).

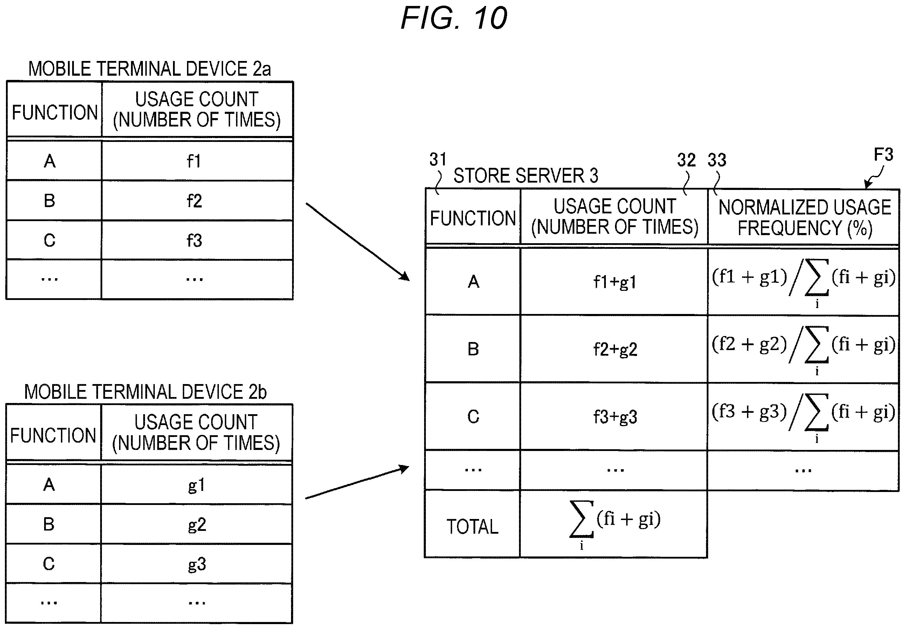

The usage frequency analysis unit 61 analyzes the usage frequency of each function of the mobile terminal devices 2 as aggregated to calculate the usage frequency for each function of all of the mobile terminal devices 2 used in the store. Details thereof are described below (with reference to FIG. 10).

The communication control unit 62 controls the communication between the store server 3 and the mobile terminal device 2.

### (Description of method of calculating usage frequency of mobile terminal devices)

FIG. 10 is a diagram for describing a method in which a store server aggregates and analyzes usage frequencies of functions from a plurality of mobile terminal devices 2.

For example, in the mobile terminal device 2a, the functions A, B, and C have the usage counts f1, f2, and f3, respectively. In the mobile terminal device 2b, the functions A, B, and C have the usage counts g1, g2, and g3, respectively. These usage counts are transmitted from the mobile terminal devices 2 (2a and 2b) to the store server 3.

The store server 3 receives the usage counts from the mobile terminal devices 2 (2a and 2b), and the usage frequency aggregation unit 60 aggregates the usage count 32 for each function 31. In the example of FIG. 10, aggregation is performed aggregated usage counts are f1 + g1, f2 + g2, and f3 + g3, respectively, for functions A, B, and C.

Subsequently, the usage frequency analysis unit 61 calculates the normalized usage frequency 33 for each function. The method of calculating the normalized usage frequency 33 is as described in the first embodiment. The usage frequency data F3 generated in this manner is stored in the store server 3. At a predetermined timing (once a day, once a week, or the like), updated usage counts are received from each of mobile terminal devices 2 (2a and 2b).

The store server 3 transmits the normalized usage frequency 33 calculated in this manner to each mobile terminal device 2. Each mobile terminal device 2 updates the usage frequency rank 34 and the score 36 in the function control table F5 (with reference to FIG. 5) based on the normalized usage frequency 33 received from the store server 3. The processes up to the updating of the function control table F5 may instead be performed on the store server 3 and transmitted to the mobile terminal devices 2.

Thereafter, each mobile terminal device 2 restricts its functions in response to its remaining amount of power of the battery 40 as described in the first embodiment, based on the function control table F5.

### (Description of flow of processing performed by order processing system)

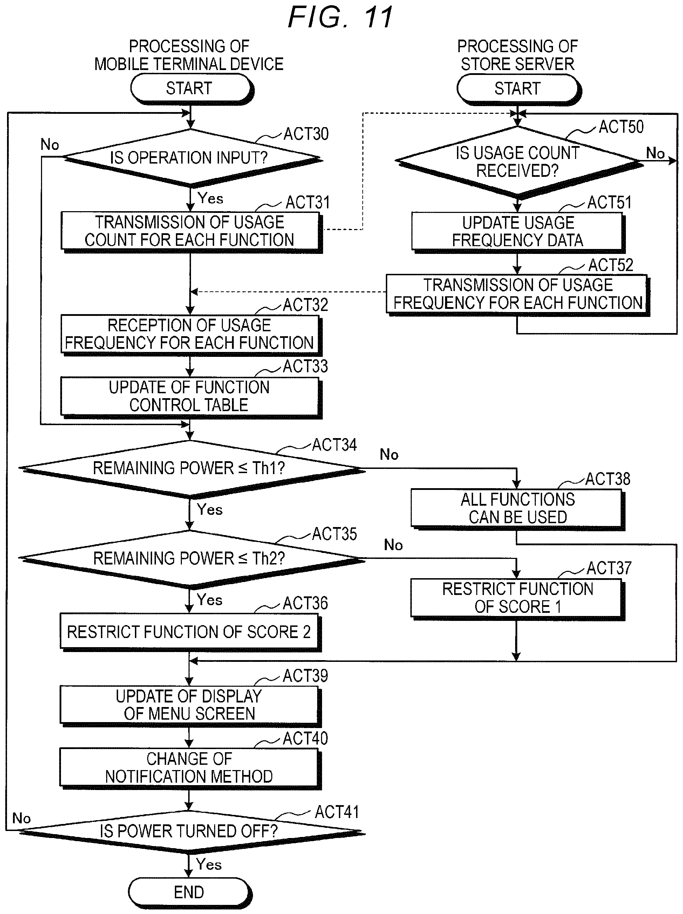

FIG. 11 is a flowchart illustrating an example of processing performed by the order processing system 30. The flow of the processing performed by the mobile terminal device 2 is described first.

The operation control unit 54 determines whether an operation is input to the touch panel 22 (Act 30). If it is determined that an operation is input to the touch panel 22 (Act 30: Yes), the process proceeds to Act 31. If it is not determined that an operation is input to the touch panel 22 (Act 30: No), the process skips to Act 33.

If it is determined as Yes in Act 30, the usage frequency acquisition unit 51b causes the communication control unit 56 to transmit the usage count for each function of the mobile terminal device 2 to the store server 3 (Act 31).

Subsequently, the usage frequency acquisition unit 51b receives the usage frequency for each function of the mobile terminal device 2 from the store server 3 (Act 32).

The operation function restriction unit 52 updates the function control table F5 by using the usage frequency for each function of the mobile terminal device 2 received from the store server 3 (Act 33).

Thereafter, since the processing from Act 24 to Act 41 performed by the mobile terminal device 2 is substantially the same as the processing from Act 13 to Act 20 performed by the mobile terminal device 1 in the first embodiment (with reference to FIG. 7), the further description thereof is omitted.

The flow of the processing performed by the store server 3 is now described. The usage frequency aggregation unit 60 determines whether a usage count for each function of the mobile terminal device 2 has been received from the mobile terminal device 2 (Act 50). If it is determined that the usage count for each function of the mobile terminal device 2 has been received (Act 50: Yes), the process proceeds to Act 51. If the usage count for each function of the mobile terminal device 2 has not been received (Act 50: No), the process returns back to Act 50.

The usage frequency analysis unit 61 updates the usage frequency data F3 (Act 51).

The usage frequency analysis unit 61 then causes the communication control unit 62 to transmit the usage frequency for each function to each mobile terminal device 2 (Act 52). Thereafter, the process returns back to Act 50.

As described above, the usage frequency aggregation unit 60 of the store server 3 in the order processing system 30 according to the second embodiment aggregates the operation frequencies for each of the functions of the mobile terminal devices 2 based on data transmitted from the mobile terminal devices 2, and the usage frequency analysis unit 61 analyzes the aggregated usage frequency of each function of the mobile terminal devices 2 to update the usage frequency of each function. The mobile terminal device 2 transmits the updated usage frequencies to each mobile terminal device 2. The mobile terminal device 2 updates the function control table F5 based on the received usage frequency and subsequently operates to restrict the functions according to the remaining amount of power of the battery 40 as described in the first embodiment. Accordingly, even when a plurality of mobile terminal devices 2 are used in the store, the usage frequencies can be calculated based on the usage history of all of the mobile terminal devices 2 and then used for establishing the function restriction ordering as the remaining amount of battery power decreases.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

## Claims

1. An information processing system (30), comprising:
a plurality of information processing devices (2), each having selectable functions and comprising a rechargeable power supply (40) and a processor (10); and
a store server (3) configured to:
receive usage frequency data for each selectable function from each information processing device;
aggregate the usage frequency data for each selectable function received from all the information processing devices;
calculate a usage frequency over a time period for each selectable function based on the aggregated usage frequency data; and
send the calculated usage frequency for each selectable function to each information processing device,
wherein the processor of each information processing device is configured to:
acquire a present charge level of the rechargeable power supply, and
determine to restrict an availability of a selectable function based on the calculated usage frequency of each selectable function sent from the store server and the present charge level.

2. The information processing system according to claim 1, wherein the processor is further configured to determine to restrict the availability of the selectable function based on the power consumption of the selectable function.

3. The information processing system according to claim 1 or 2, wherein the processor is configured to:
restrict an availability of a first selectable function based on the calculated usage frequency of each selectable function when the present charge level is less than a first threshold value, but greater than a second threshold value, and
restrict an availability of a second selectable function based on the calculated usage frequency of each selectable function when the present charge level is less than or equal to the second threshold value.

4. The information processing system according to any one of claims 1 to 3, wherein the information processing device further comprises a display (20) for displaying the selectable functions on a menu screen.

5. The information processing system according to claim 4, wherein
the processor is configured to generate the menu screen, and
the selectable function having a restricted availability is displayed in a manner indicating a non-selectable state.

6. The information processing system according to claim 4, wherein the display is a touchscreen configured to receive user input selecting a selectable function.

7. The information processing system according to any one of claims 1 to 6, wherein the calculated usage frequency for each selectable function is calculated for each selectable function as a total number of selections over a time period for the selectable function divided by a summed total number of selections over the time period for all of the selectable functions.

8. The information processing system according to any one of claims 1 to 7, wherein the processor is further configured to register items ordered by customer in an order data file.

9. The information processing system according to any one of claims 1 to 8, wherein the information processing device further comprises a wireless communication interface (38) configured to communicate with the store server.

10. The information processing system according to claim 9, wherein the calculated usage frequency of each selectable function is provided by the store server via the wireless communication interface.

11. The information processing system according to any one of claims 1 to 10, wherein the information processing device further comprises:
a notification unit (5, 6, 7) configured to indicate a present operating state of the information processing device to a user, wherein
the processor is further configured to control the notification unit according to the present charge level.

12. A method of controlling an information processing system (30) comprising a store server (3) and a plurality of information processing devices (2), each information processing device having various selectable functions and comprising a rechargeable battery (40) and a processor (10), the method comprising:
steps by the store server:
receiving usage frequency data for each selectable function from each information processing device;
aggregating the usage frequency data for each selectable function received from all the information processing devices;
calculating a usage frequency over a time period for each selectable function based on the aggregated usage frequency data; and
sending the calculated usage frequency for each selectable function to each information processing device,
and steps by the processor of each information processing device:
acquiring a present charge level of the rechargeable battery; and
restricting an availability of a selectable function based on the calculated usage frequency of each selectable function sent from the store server and the present charge level.

13. The method according to claim 12, further comprising the following steps by the processor of each information processing device:
restricting an availability of a first selectable function based on the calculated usage frequency of each selectable function when the present charge level is less than a first threshold value, but greater than a second threshold value; and
restricting an availability of a second selectable function based on the calculated usage frequency of each selectable function when the present charge level is less than or equal to the second threshold value.

## Patentansprüche

1. Informationsverarbeitungssystem (30), umfassend:
eine Mehrzahl von Informationsverarbeitungsvorrichtungen (2), die jeweils auswählbare Funktionen aufweisen und eine wiederaufladbare Leistungsversorgung (40) und einen Prozessor (10) umfassen; und
einen Speicherserver (3), der konfiguriert ist zum:
Empfangen von Nutzungshäufigkeitsdaten für jede auswählbare Funktion von jeder Informationsverarbeitungsvorrichtung;
Aggregieren der Nutzungshäufigkeitsdaten für jede auswählbare Funktion, die von allen der Informationsverarbeitungsvorrichtungen empfangen werden;
Berechnen einer Nutzungshäufigkeit über einen Zeitraum für jede auswählbare Funktion basierend auf den aggregierten Nutzungshäufigkeitsdaten; und
Senden der berechneten Nutzungshäufigkeit für jede auswählbare Funktion an jede Informationsverarbeitungsvorrichtung,
wobei der Prozessor jeder Informationsverarbeitungsvorrichtung konfiguriert ist zum:
Erfassen eines aktuellen Ladestands der wiederaufladbaren Leistungsversorgung und
Bestimmen, eine Verfügbarkeit einer auswählbaren Funktion einzuschränken, basierend auf der vom Speicherserver gesendeten berechneten Nutzungshäufigkeit jeder auswählbaren Funktion und dem aktuellen Ladezustand.

2. Informationsverarbeitungssystem nach Anspruch 1, wobei der Prozessor ferner so konfiguriert ist, dass er basierend auf dem Leistungsverbrauch der auswählbaren Funktion bestimmt, die Verfügbarkeit der auswählbaren Funktion einzuschränken.

3. Informationsverarbeitungssystem nach Anspruch 1 oder 2, wobei der Prozessor konfiguriert ist zum:
Einschränken einer Verfügbarkeit einer ersten auswählbaren Funktion basierend auf der berechneten Nutzungshäufigkeit jeder auswählbaren Funktion, wenn der aktuelle Ladestand unter einem ersten Schwellenwert, aber über einem zweiten Schwellenwert liegt,
Einschränken einer Verfügbarkeit einer zweiten auswählbaren Funktion basierend auf der berechneten Nutzungshäufigkeit jeder auswählbaren Funktion, wenn der aktuelle Ladestand unter oder gleich dem zweiten Schwellenwert ist.

4. Informationsverarbeitungssystem nach einem der Ansprüche 1 bis 3, wobei die Informationsverarbeitungsvorrichtung ferner eine Anzeige (20) zum Anzeigen der auswählbaren Funktionen auf einem Menübildschirm umfasst.

5. Informationsverarbeitungssystem nach Anspruch 4, wobei
der Prozessor zum Erzeugen des Menübildschirms konfiguriert ist, und
die auswählbare Funktion mit einer eingeschränkten Verfügbarkeit so angezeigt wird, dass sie einen nicht auswählbaren Zustand angibt.

6. Informationsverarbeitungssystem nach Anspruch 4, wobei die Anzeige ein Touchscreen ist, der zum Empfangen einer Benutzereingabe konfiguriert ist, die eine auswählbare Funktion auswählt.

7. Informationsverarbeitungssystem nach einem der Ansprüche 1 bis 6, wobei für jede auswählbare Funktion die berechnete Nutzungshäufigkeit für jede auswählbare Funktion als eine Gesamtanzahl von Auswahlen über einen Zeitraum für die auswählbare Funktion geteilt durch eine summierte Gesamtanzahl von Auswahlen über den Zeitraum für alle der auswählbaren Funktionen berechnet wird.

8. Informationsverarbeitungssystem nach einem der Ansprüche 1 bis 7, wobei der Prozessor ferner so konfiguriert ist, dass er Artikel, die von einem Kunden bestellt werden, in einer Bestelldatendatei registriert.

9. Informationsverarbeitungssystem nach einem der Ansprüche 1 bis 8, wobei die Informationsverarbeitungsvorrichtung ferner eine drahtlose Kommunikationsschnittstelle (38) umfasst, die zum Kommunizieren mit dem Speicherserver konfiguriert ist.

10. Informationsverarbeitungssystem nach Anspruch 9, wobei die berechnete Nutzungshäufigkeit jeder auswählbaren Funktion durch den Speicherserver über die drahtlose Kommunikationsschnittstelle bereitgestellt wird.

11. Informationsverarbeitungssystem nach einem der Ansprüche 1 bis 10, wobei die Informationsverarbeitungsvorrichtung ferner umfasst:
eine Meldeeinheit (5, 6, 7), die zum Angeben eines aktuellen Betriebszustands der Informationsverarbeitungsvorrichtung für einen Benutzer konfiguriert ist, wobei
wobei der Prozessor ferner zum Steuern der Meldeeinheit gemäß dem aktuellen Ladestand konfiguriert ist.

12. Verfahren zur Steuerung eines Informationsverarbeitungssystems (30), das einen Speicherserver (3) und eine Mehrzahl von Informationsverarbeitungsvorrichtungen (2) umfasst, wobei jede Informationsverarbeitungsvorrichtung verschiedene auswählbaren Funktionen aufweist und eine wiederaufladbare Batterie (40) und einen Prozessor (10) umfasst, wobei das Verfahren umfasst:
Schritte durch den Speicherserver:
Empfangen von Nutzungshäufigkeitsdaten für jede auswählbare Funktion von jeder Informationsverarbeitungsvorrichtung;
Aggregieren der Nutzungshäufigkeitsdaten für jede auswählbare Funktion, die von allen der Informationsverarbeitungsvorrichtungen empfangen werden;
Berechnen einer Nutzungshäufigkeit über einen Zeitraum für jede auswählbare Funktion basierend auf den aggregierten Nutzungshäufigkeitsdaten; und
Senden der berechneten Nutzungshäufigkeit für jede auswählbare Funktion an jede Informationsverarbeitungsvorrichtung,
und Schritte durch den Prozessor jeder Informationsverarbeitungsvorrichtung:
Erfassen eines aktuellen Ladestands der wiederaufladbaren Batterie; und
Einschränken einer Verfügbarkeit einer auswählbaren Funktion basierend auf der vom Speicherserver gesendeten berechneten Nutzungshäufigkeit jeder auswählbaren Funktion und dem aktuellen Ladestand.

13. Verfahren nach Anspruch 12, ferner umfassend die folgenden Schritte durch den Prozessor jeder Informationsverarbeitungsvorrichtung:
Einschränken einer Verfügbarkeit einer ersten auswählbaren Funktion basierend auf der berechneten Nutzungshäufigkeit jeder auswählbaren Funktion, wenn der aktuelle Ladestand unter einem ersten Schwellenwert, aber über einem zweiten Schwellenwert liegt; und
Einschränken einer Verfügbarkeit einer zweiten auswählbaren Funktion basierend auf der berechneten Nutzungshäufigkeit jeder auswählbaren Funktion, wenn der aktuelle Ladestand unter oder gleich dem zweiten Schwellenwert ist.

## Revendications

1. Système de traitement d'informations (30), comprenant :
une pluralité de dispositifs de traitement d'informations (2), lesquels présentent chacun des fonctions sélectionnables et comprennent une alimentation électrique rechargeable (40) et un processeur (10) ; et
un serveur de magasin (3) configuré de manière à :
recevoir des données de fréquence d'utilisation pour chaque fonction sélectionnable de chaque dispositif de traitement d'informations ;
agréger les données de fréquence d'utilisation, pour chaque fonction sélectionnable, reçues à partir de tous les dispositifs de traitement d'informations ;
calculer une fréquence d'utilisation sur une période de temps pour chaque fonction sélectionnable, sur la base des données de fréquence d'utilisation agrégées ; et
envoyer la fréquence d'utilisation calculée pour chaque fonction sélectionnable à chaque dispositif de traitement d'informations ;
dans lequel le processeur de chaque dispositif de traitement d'informations est configuré de manière à :
acquérir un niveau de charge en cours de l'alimentation électrique rechargeable ; et
déterminer s'il convient de restreindre une disponibilité d'une fonction sélectionnable sur la base de la fréquence d'utilisation calculée de chaque fonction sélectionnable, envoyée par le serveur de magasin, et du niveau de charge en cours.

2. Système de traitement d'informations selon la revendication 1, dans lequel le processeur est en outre configuré de manière à déterminer s'il convient de restreindre la disponibilité de la fonction sélectionnable sur la base de la consommation d'énergie de la fonction sélectionnable.

3. Système de traitement d'informations selon la revendication 1 ou 2, dans lequel le processeur est configuré de manière à :
restreindre une disponibilité d'une première fonction sélectionnable sur la base de la fréquence d'utilisation calculée de chaque fonction sélectionnable lorsque le niveau de charge en cours est inférieur à une première valeur de seuil, mais supérieur à une seconde valeur de seuil ; et
restreindre une disponibilité d'une seconde fonction sélectionnable sur la base de la fréquence d'utilisation calculée de chaque fonction sélectionnable lorsque le niveau de charge en cours est inférieur ou égal à la seconde valeur de seuil.

4. Système de traitement d'informations selon l'une quelconque des revendications 1 à 3, dans lequel le dispositif de traitement d'informations comprend en outre un écran d'affichage (20) destiné à afficher les fonctions sélectionnables sur un écran de menu.

5. Système de traitement d'informations selon la revendication 4, dans lequel :
le processeur est configuré de manière à générer l'écran de menu ; et
la fonction sélectionnable présentant une disponibilité restreinte est affichée d'une manière indiquant un état non sélectionnable.

6. Système de traitement d'informations selon la revendication 4, dans lequel l'écran d'affichage est un écran tactile configuré de manière à recevoir une entrée d'utilisateur sélectionnant une fonction sélectionnable.

7. Système de traitement d'informations selon l'une quelconque des revendications 1 à 6, dans lequel la fréquence d'utilisation calculée pour chaque fonction sélectionnable est calculée pour chaque fonction sélectionnable sous la forme d'un nombre total de sélections sur une période de temps pour la fonction sélectionnable, divisé par un nombre total cumulé de sélections sur la période de temps pour toutes les fonctions sélectionnables.

8. Système de traitement d'informations selon l'une quelconque des revendications 1 à 7, dans lequel le processeur est en outre configuré de manière à enregistrer des articles commandés par un client dans un fichier de données de commande.

9. Système de traitement d'informations selon l'une quelconque des revendications 1 à 8, dans lequel le dispositif de traitement d'informations comprend en outre une interface de communication sans fil (38) configurée de manière à communiquer avec le serveur de magasin.

10. Système de traitement d'informations selon la revendication 9, dans lequel la fréquence d'utilisation calculée de chaque fonction sélectionnable est fournie par le serveur de magasin par l'intermédiaire de l'interface de communication sans fil.

11. Système de traitement d'informations selon l'une quelconque des revendications 1 à 10, dans lequel le dispositif de traitement d'informations comprend en outre :
une unité de notification (5, 6, 7) configurée de manière à indiquer, à un utilisateur, un état de fonctionnement en cours du dispositif de traitement d'informations, dans lequel
le processeur est en outre configuré de manière à commander l'unité de notification selon le niveau de charge en cours.

12. Procédé de commande d'un système de traitement d'informations (30) comprenant un serveur de magasin (3) et une pluralité de dispositifs de traitement d'informations (2), chaque dispositif de traitement d'informations présentant diverses fonctions sélectionnables et comprenant une batterie rechargeable (40) et un processeur (10), le procédé comprenant :
des étapes, mises en oeuvre par le serveur de magasin, consistant à :
recevoir des données de fréquence d'utilisation pour chaque fonction sélectionnable de chaque dispositif de traitement d'informations ;
agréger les données de fréquence d'utilisation, pour chaque fonction sélectionnable, reçues à partir de tous les dispositifs de traitement d'informations ;
calculer une fréquence d'utilisation sur une période de temps pour chaque fonction sélectionnable, sur la base des données de fréquence d'utilisation agrégées ; et
envoyer la fréquence d'utilisation calculée pour chaque fonction sélectionnable à chaque dispositif de traitement d'informations ; et
des étapes, mises en oeuvre par le processeur de chaque dispositif de traitement d'informations, consistant à :
acquérir un niveau de charge en cours de l'alimentation électrique rechargeable ; et
restreindre une disponibilité d'une fonction sélectionnable sur la base de la fréquence d'utilisation calculée de chaque fonction sélectionnable, envoyée par le serveur de magasin, et du niveau de charge en cours.

13. Procédé selon la revendication 12, comprenant en outre les étapes ci-dessous, mises en oeuvre par le processeur de chaque dispositif de traitement d'informations, consistant à :
restreindre une disponibilité d'une première fonction sélectionnable sur la base de la fréquence d'utilisation calculée de chaque fonction sélectionnable lorsque le niveau de charge en cours est inférieur à une première valeur de seuil, mais supérieur à une seconde valeur de seuil ; et
restreindre une disponibilité d'une seconde fonction sélectionnable sur la base de la fréquence d'utilisation calculée de chaque fonction sélectionnable lorsque le niveau de charge en cours est inférieur ou égal à la seconde valeur de seuil.
